# FASCICULE DE BREVET EUROPEEN

(11) **EP 2 635 170 B1**
(45) Date de publication et mention de la délivrance du brevet: **05.12.2018**
(21) Numéro de dépôt: 11832123.1
(22) Date de dépôt: 26.10.2011
(51) Int. Cl.: A47L 9/16

(54) **ASPIRATEUR SANS SAC A SEPARATION CYCLONIQUE**
BEUTELLOSER STAUBSAUGER MIT ZYKLONFILTER
BAGLESS VACUUM CLEANER HAVING CYCLONIC SEPARATION

(30) Priorité: 04.11.2010 FR 1059110
(43) Date de publication de la demande: 11.09.2013
(73) Titulaire: SEB S.A., 69130 Ecully (FR)
(72) Inventeur: DAVID, Fabien, F-27940 Notre Dame De L'isle (FR)
(74) Mandataire: Bourrières, Patrice
(86) Numéro de dépôt international: PCT/FR2011/052507
(87) Numéro de publication internationale: WO 2012/059667

(56) Documents cités:
- EP-A2- 1 652 458
- EP-A2- 1 688 078
- WO-A2-01/95780
- US-A1- 2006 123 590
- US-A1- 2006 230 722

## Description

La présente invention concerne le domaine technique des aspirateurs utilisés pour le nettoyage par aspiration d'un flux d'air entraînant les poussières et autres déchets se trouvant à proximité d'une tête d'aspiration. L'invention concerne plus particulièrement le domaine des aspirateurs sans sac dans lesquels la séparation entre l'air rejeté et les particules aspirées est essentiellement réalisée au moyen d'un système de cyclones par opposition aux aspirateurs avec sac dans lesquels la séparation est effectuée par filtration.

Un aspirateur sans sac comprend généralement, comme cela est décrit par le document EP 1 361815, un étage primaire de séparation cyclonique suivi d'un étage secondaire de séparation cyclonique. La récupération des déchets séparés au niveau de l'étage primaire s'effectue au niveau de la chambre de séparation dudit étage primaire dont le corps externe fait office de bac de récupération. Selon ce document, la majeure partie du volume intérieur du corps externe est occupée par le premier étage de séparation ainsi qu'une partie du deuxième étage de séparation de sorte que le volume utile pour la récupération des déchets est relativement faible. Par ailleurs, pour vidanger les déchets, l'utilisateur doit démonter l'ensemble formé par les deux étages de filtration puis déverrouiller une trappe située au niveau du fond du bac de récupération.

Une telle architecture présente les inconvénients, d'une part, d'offrir un espace limité pour l'accumulation des déchets séparés de l'air aspiré et, d'autre part, d'imposer de transporter l'ensemble lourd et volumineux constitué par les systèmes de séparation cyclonique et le bac de récupération jusqu'au lieu de vidage. Par ailleurs, dans la mesure où l'accumulation des déchets s'effectue au sein même du dispositif de séparation cyclonique il existe un risque que les déchets séparés par le système primaire soient ré-aspirés vers le système secondaire.

Afin de remédier à cet inconvénient une demande WO2007/008772 a proposé un aspirateur sans sac à séparation des déchets par système cyclonique mettant en oeuvre un premier récipient amovible de récupération des déchets situés sous le séparateur primaire et séparable de ce dernier de manière à pouvoir être transporté indépendamment de celui-ci jusqu'à un lieu de vidage des déchets. Cependant, il est apparu à l'usage que lorsque le récipient de récupération est retiré de l'aspirateur, il se trouve largement ouvert de sorte que les déchets y sont accumulés sont susceptibles d'en sortir spontanément lors du transport du récipient vers son lieu de vidage. De plus, ce document n'apporte pas de solution satisfaisante au risque de recirculation des déchets.

Par ailleurs, selon ce document les poussières fines séparées par le deuxième étage de séparation sont récupérées par un deuxième récipient aménagé dans le premier récipient. Il est connu que les poussières fines, dites fines, ont tendance à adhérer aux parois du récipient qui les contient ce qui nécessite un nettoyage de ce dernier à l'eau. Or, l'intégration de ce récipient de récupération des fines au récipient de récupération des déchets plus volumineux du premier étage oblige à nettoyer les deux en même temps ce qui n'est pas toujours pratique. Un autre aspirateur, selon le préambule de la revendication 1, est décrit dans le document US 2006/123590 A1.

Ainsi, il est apparu le besoin d'un aspirateur sans sac dont le récipient de récupération des déchets du second étage puisse être facilement nettoyé. Il est également apparu le besoin d'un aspirateur qui réduise les risques de recirculation des déchets séparés, qui puisse être vidé sans devoir transporter l'ensemble du système de séparation cyclonique et dont les récipients de récupération des déchets puissent être facilement transportés sans risque de sortie, pendant le transport, des déchets qui y sont accumulés.

Afin d'atteindre cet objectif l'invention concerne un aspirateur comprenant un ensemble de séparation des déchets qui comprend :
- au moins un premier étage de séparation cyclonique comportant un séparateur primaire par cyclone d'axe longitudinal Δ,
- un premier récipient amovible de récupération des déchets situé sous le séparateur primaire,
- au moins un deuxième étage de séparation cyclonique comportant au moins un séparateur secondaire par cyclone d'axe longitudinal Δ',
- au moins un deuxième récipient amovible de récupération des déchets situé sous le séparateur secondaire et séparé du premier récipient de récupération des déchets.
Selon l'invention, le deuxième récipient amovible de récupération des déchets est indépendant du premier récipient amovible et peut être transporté indépendamment de ce dernier.

La mise en oeuvre d'un deuxième récipient pour les fines qui est indépendant du premier récipient permet de nettoyer ce deuxième récipient seul. De plus, compte tenu de ce caractère indépendant et de la taille des déchets qui y sont récupérés, il est possible de réaliser le deuxième récipient de récupération de manière à ce qu'il présente un volume plus petit que celui du premier récipient et donc plus adapté à un nettoyage à l'eau notamment sous le robinet.

Selon une forme de réalisation de l'invention, le deuxième étage de séparation cyclonique comporte plusieurs séparateurs secondaires et le deuxième récipient de récupération des déchets comprend un compartiment à déchets séparé des autres compartiments pour chaque séparateur secondaire. La mise en oeuvre de compartiments séparés pour les séparateurs secondaires permet de réduire les bruits d'air et de limiter les risques de recirculation des fines.

Selon une caractéristique de l'invention, le deuxième récipient de récupération des déchets comprend un couvercle mobile qui est pourvu d'une ouverture de raccordement à chaque séparateur secondaire.

Selon une caractéristique de l'invention visant à offrir un accès facilité au deuxième récipient amovible de récupération des déchets, ce dernier est placé au-dessus du premier récipient amovible de récupération des déchets.

Selon une forme de réalisation de l'invention, le premier récipient amovible de récupération des déchets est associé à un premier couvercle mobile et le deuxième récipient amovible de récupération des déchets est placé sur le premier couvercle ou dans un logement du premier couvercle. La mise en oeuvre d'un premier couvercle permet un transport du récipient de récupération avec le premier couvercle dans une position fermée réduisant ainsi les risques de répandre à l'extérieur les déchets accumulés. Une fois arrivée sur le lieu de vidage, il est possible d'ouvrir le premier couvercle de manière à dégager largement la bouche du premier récipient amovible et rendre ainsi son vidage aisé.

Selon une variante de cette forme de réalisation, le premier couvercle définit un conduit de liaison entre le séparateur primaire et le premier récipient amovible, le conduit de liaison ayant, au niveau de son raccordement au séparateur primaire, une section d'entrée de forme générale annulaire coaxiale à l'axe Δ. La forme annulaire de la section d'entrée du premier couvercle permet d'éviter pendant le fonctionnement de l'aspirateur une recirculation des déchets qui se sont accumulés dans le premier récipient amovible de récupération tout en permettant aux déchets assez volumineux de pouvoir entrer dans le récipient aisément.

Selon une caractéristique de l'invention, la section d'entrée du premier couvercle possède une surface inférieure à la surface de la section de sortie du premier couvercle située au niveau du raccordement du conduit de liaison au premier récipient amovible. L'augmentation de la section du conduit de liaison entre son entrée et la sortie permet d'accentuer la réduction de la vitesse de l'air dans le récipient de récupération et contribue à limiter les risques de recirculation des déchets.

Selon une autre caractéristique de l'invention, la paroi externe du conduit de liaison diverge entre la section d'entrée et la section de sortie. Cette divergence de la paroi externe du conduit de liaison contribue à éviter que les déchets accumulés dans le récipient de récupération, d'une part, ne soient réaspirés et, d'autre part, ne s'en échappent pendant son transport lorsqu'il a été retiré de l'aspirateur. Selon une variante de cette caractéristique, le diamètre externe de la section d'entrée du premier couvercle pourra être choisi de manière à être inférieur à la plus petite dimension de la périphérie ou pourtour de la section de sortie du premier couvercle. Cette augmentation du diamètre externe du conduit de liaison, entre la section d'entrée et la section de sortie, permet également de réduire les vitesses d'air et limiter la recirculation des déchets.

Selon encore une autre caractéristique de l'invention, le séparateur primaire comprend un corps tubulaire dont la paroi diverge avant une zone de raccordement au premier couvercle de manière que le corps tubulaire présente, dans la zone de raccordement, un diamètre interne supérieur au diamètre interne du corps tubulaire en dehors de la zone de raccordement. Ainsi, la zone de raccordement du corps tubulaire au premier couvercle définit une sorte de zone tampon qui induit un ralentissement de l'air et qui est en mesure de retenir les déchets pour éviter leur recirculation avant leur cheminement dans le conduit de liaison du premier couvercle vers le bac de récupération.

Selon l'invention le premier couvercle peut être réalisé de toutes manières appropriées. Selon une forme de réalisation, le premier couvercle comprend :
- un corps extérieur creux dont une extrémité supérieure comprend des moyens de raccordement au séparateur primaire et une extrémité inférieure comprend des moyens de raccordement au premier récipient amovible,
- un noyau qui est situé à l'intérieur du corps extérieur et qui délimite avec le corps extérieur le conduit de liaison s'étendant entre le noyau et le corps extérieur.

Selon une variante de cette forme de réalisation, le corps extérieur comprend une partie supérieure tubulaire sensiblement cylindrique d'axe Δ et une partie inférieure de forme générale tronconique d'axe Δ.

Selon une caractéristique de cette variante de réalisation, le séparateur secondaire est situé à l'extérieur du séparateur primaire et le deuxième récipient s'étend en partie au moins autour de la partie supérieure du corps extérieur du premier couvercle.

Selon une autre caractéristique de cette forme de réalisation, le séparateur secondaire est situé à l'intérieur du séparateur primaire et le deuxième récipient de récupération des déchets est situé dans un logement du noyau du premier couvercle.

Selon une autre variante de cette forme de réalisation, le noyau possède une forme générale cylindrique ou tronconique de révolution d'axe Δ.

Selon encore une autre variante de cette forme de réalisation, le noyau est lié au corps par une languette latérale.

Dans le cadre de cette dernière variante de réalisation, le premier couvercle peut comprendre un déflecteur qui s'étend à partir de la languette de liaison à l'intérieur du premier récipient amovible. Ce déflecteur est destiné à éviter que les déchets se présentant sous la forme de filaments tels que par exemple les fils textiles, les cheveux ou les poils, ne restent accrochés, pendant le fonctionnement de l'aspirateur, à la languette de liaison et forment un amas faisant obstacle à une bonne évacuation des déchets séparés vers le fond du récipient de récupération.

Afin d'optimiser cette fonction anti-accrochage, le déflecteur pourra présenter une surface externe convexe et posséder une partie terminale inclinée vers le centre du premier récipient amovible. Le déflecteur ainsi réalisé possède également une fonction anti- retour ou remous et fait obstacle à la recirculation des déchets accumulés au fond du récipient de récupération.

Toujours dans le but de limiter les risques de recirculation des déchets, le noyau peut comprendre, dans sa région inférieure, une collerette plane périphérique anti-refoulement.

Dans une forme de réalisation, la collerette possède une forme générale sensiblement annulaire avec un diamètre extérieur sensiblement égal ou supérieur au diamètre externe de la section d'entrée du premier couvercle.

Afin de limiter le poids du premier couvercle, le noyau pourra être creux et obturé au niveau de son extrémité supérieure située sensiblement au niveau de la section d'entrée du premier couvercle.

Selon l'invention, le premier couvercle peut être associé au premier récipient amovible en étant indépendant et complètement séparable de ce dernier. Selon l'invention, le premier couvercle peut également être lié au premier récipient amovible.

Le premier couvercle pourra alors être par exemple articulé sur le premier récipient amovible de manière à être mobile en rotation entre une position ouverte et une position fermée.

Selon une caractéristique de l'invention, l'aspirateur comprend des moyens de verrouillage du premier couvercle dans une position de fermeture au moins partielle du premier récipient.

Bien entendu les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée, effectuée en référence aux dessins qui illustrent une forme non limitative de réalisation d'un aspirateur à système de séparation cyclonique conforme à l'invention.
- La figure 1 est une perspective schématique d'un aspirateur sans sac selon l'invention.
- La figure 2 est une élévation partiellement coupée de l'aspirateur sans sac illustré à la figure 1.
- La figure 3 est une coupe axiale à plus grande échelle d'un premier récipient amovible de récupération des déchets et de son premier couvercle tels que mis en oeuvre sur l'aspirateur illustré à la figure 1.
- La figure 4 est une perspective de l'ensemble formé par le premier récipient amovible de récupération des déchets et un deuxième récipient amovible de récupération des déchets placé sur le premier couvercle, ce premier couvercle étant en position fermée.
- La figure 5 est une perspective de l'ensemble illustré à la figure 4, le premier couvercle étant en position ouverte.
- La figure 6 est une perspective de l'ensemble illustré aux figures 4 et 5, montrant le deuxième récipient amovible détaché du premier récipient avec le couvercle du deuxième récipient en position ouverte.

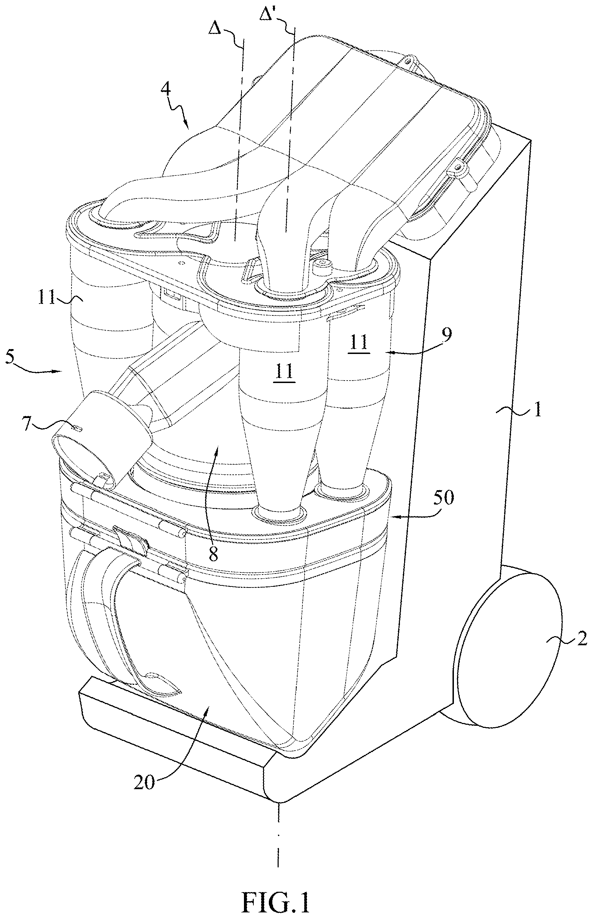

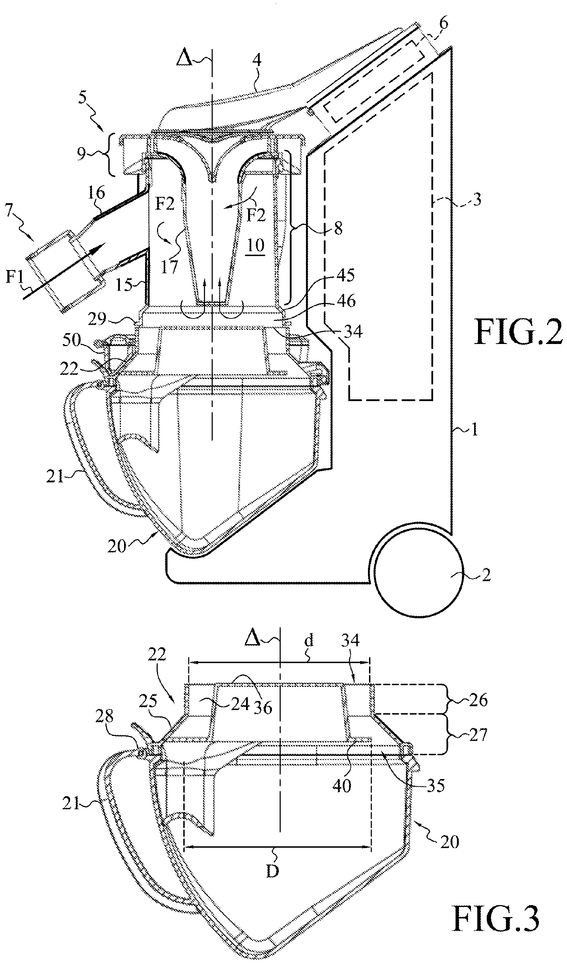

Un aspirateur conforme à l'invention, tel qu'illustré aux figures 1 et 2, comprend un bâti 1 supporté par des roues 2 facilitant les déplacements de l'aspirateur lors de son utilisation. De façon connue, le bâti comprend un bloc moto-ventilateur 3 destiné à générer une dépression, un enrouleur de câble électrique et une électronique de commande ainsi que des organes de commande manuelle permettant de piloter le fonctionnement l'aspirateur. Ces différents éléments, qui ne constituent pas l'objet de l'invention en elle-même, n'ont pas tous été représentés afin d'alléger la figure 1.

L'aspirateur comprend un conduit 4 assurant une liaison aéraulique entre le bloc moto-ventilateur 3 et un ensemble de séparation 5 de sorte que le bloc moto-ventilateur y établit une dépression pendant son fonctionnement. Le conduit 4 peut comprendre en amont du bloc moto-ventilateur un média filtrant 6, tel qu'une mousse, destiné à piéger les particules les plus fines qui n'auraient pas été séparées de l'air aspiré par l'ensemble de séparation 5.

L'ensemble de séparation 5 comprend une bouche de raccordement 7 d'un balai d'aspiration, non représenté, comprenant généralement une tête d'aspiration adaptée à l'extrémité d'un tube télescopique rigide raccordé à la bouche 7 par un tube flexible de sorte que la tête d'aspiration se trouve en liaison aéraulique avec le bloc moto-ventilateur 3 via l'ensemble de séparation 5 et le conduit 4.

Conformément à une caractéristique essentielle de l'invention, l'ensemble de séparation 5 met en oeuvre un principe de séparation cyclonique des déchets et de l'air aspiré. Ainsi, l'ensemble de séparation 5 comprend en aval de la bouche 7 au moins un et, selon l'exemple illustré, deux étages 8 et 9 de séparation cyclonique. Le premier étage 8 comporte un séparateur primaire 10 par cyclone tandis que le deuxième étage 9 comprend quatre séparateurs secondaires 11 situés en aval du séparateur primaire 10 et à l'extérieur de ce dernier. Seuls trois des quatre séparateurs secondaires 11 sont visibles à la figure 1. Il est à noter que le deuxième étage de séparation cyclonique 9 pourrait comprendre plus de quatre séparateurs secondaires ou au contraire moins de quatre séparateurs secondaires cycloniques. Par ailleurs, le ou les séparateurs secondaires pourraient également être situés à l'intérieur du séparateur primaire et non pas à l'extérieur de ce dernier comme cela est illustré. Selon l'exemple illustré, les axes longitudinaux Δ' des séparateurs secondaires 11 sont parallèles à l'axe longitudinal Δ du séparateur primaire 10.

Le séparateur primaire 10 comprend un corps tubulaire 15 qui délimite une chambre de forme générale tronconique de révolution d'axe Δ dont la paroi externe diverge vers le bas. La bouche 7 de raccordement du balai est alors reliée au corps 15 par un conduit 16 qui débouche de manière tangentielle dans le séparateur primaire 10. Le premier étage 8 comprend également au centre du corps tubulaire 15 un tube 17 de liaison au deuxième étage de séparation 9. Le tube 17 présente une partie basse à symétrie de révolution d'axe Δ dont l'extrémité inférieure est sensiblement tronconique et converge vers le bas.

Lors du fonctionnement de l'aspirateur, l'air et les déchets aspirés arrivent par le conduit 16 tangentiellement à l'intérieur du séparateur primaire 10 comme le montre la flèche F1. Il se crée alors un vortex descendant autour du tube 17 comme le montrent les flèches F2. Les déchets contenus dans l'air, et notamment les plus lourds, ont alors tendance à s'accumuler vers l'extérieur en partie basse du corps 15 sous l'effet combiné des forces centrifuges, du sens de circulation de l'air et de la pesanteur. L'air aspiré par l'ouverture basse du tube de liaison 17 se trouve alors débarrassé d'une grande partie des déchets qu'il contenait jusqu'à présent.

Afin d'assurer la récupération des déchets centrifugés par le séparateur primaire 10, l'aspirateur comprend un premier récipient amovible 20 de récupération des déchets qui est situé sous le séparateur primaire 10. Par amovible, il faut comprendre que le récipient 20 peut être retiré de l'aspirateur par un utilisateur sans l'aide d'outils, de même pour la remise en place du récipient 20. Selon l'exemple illustré, le récipient 20 est adapté sous le séparateur primaire 10 dans un logement de réception aménagé dans le bâti 1 étant entendu que tout autre mode d'adaptation pourrait être envisagé.

Selon l'exemple illustré et comme le montrent plus particulièrement les figures de 3 à 6, le récipient 20 se présente sous la forme d'un bol ou bac réalisé en matière plastique de préférence au moins partiellement transparente ou translucide de manière à permettre à l'utilisateur d'en apprécier visuellement le remplissage. Le récipient 20 est équipé d'une poignée 21 en forme d'anse qui en facilite la manipulation.

Selon l'invention, le récipient 20 est associé à un premier couvercle mobile 22 qui assure l'interface entre le récipient 20 et le séparateur primaire 10. Ainsi, afin d'assurer la jonction et la liaison aéraulique entre le récipient 20 et le séparateur primaire 10, le premier couvercle 22 définit un conduit de liaison 24 entre le séparateur primaire 10 et le récipient 20.

Selon l'exemple illustré, le premier couvercle 22 comprend un corps extérieur creux 25 avec une partie supérieure 26 sensiblement cylindrique de révolution d'axe Δ et une partie inférieure 27 de forme générale tronconique d'axe Δ. La partie supérieure 26 présente une section droite transversale sensiblement circulaire tandis que la partie inférieure 27 présente au niveau de sa région la plus évasée une section droite transversale de forme générale rectangulaire à coins arrondis. La conformation des parties supérieure 26 et inférieure 27 confère au corps extérieur creux 25 l'allure générale d'un entonnoir renversé.

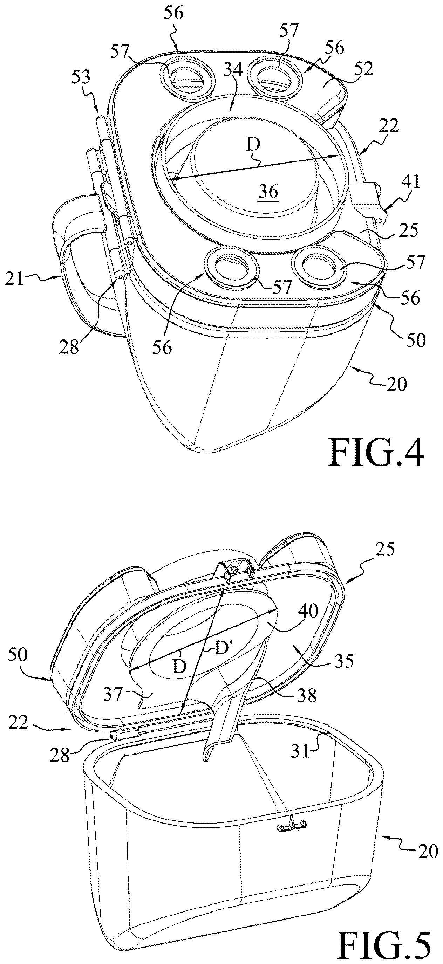

Le corps extérieur 25 est lié au récipient 20 par une charnière 28 de sorte que le premier couvercle 22 est mobile en rotation entre une position fermée, telle qu'illustrée aux figures 3, 4 et 6, et une position ouverte telle qu'illustrée à la figure 5.

De manière à éviter les fuites et les sifflements lors du fonctionnement de l'aspirateur, le premier couvercle 22 étant en position fermée et l'ensemble premier couvercle 22 - récipient 20 adapté sur le bâti 1, il est mis en oeuvre des moyens de raccordement du premier couvercle 22 avec, d'une part, le séparateur primaire 10 et, d'autre part, le récipient 20 qui sont adaptés pour réaliser une liaison sensiblement étanche à l'air. Ces moyens de raccordement peuvent être réalisés de toute manière appropriée. Selon l'exemple illustré, les moyens de raccordement entre le séparateur primaire 10 et le premier couvercle 22 sont formés par la bouche circulaire de la partie supérieure 26 qui est destinée à venir en appui contre un épaulement 29 offert par une extrémité inférieure du corps 15 de manière à réaliser la liaison sensiblement étanche à l'air. Afin de parfaire cette étanchéité, il peut être mis en oeuvre une garniture d'étanchéité au niveau de l'épaulement 29.

Toujours selon l'exemple illustré, les moyens de raccordement du premier couvercle 22 au récipient 20 comprennent une gorge périphérique aménagée à la périphérie inférieure de la partie inférieure 27 du corps extérieur 25. La gorge périphérique est destinée à recevoir une garniture d'étanchéité, non représentée, destinée à venir en appui sur un rebord périphérique 31 aménagé tout autour de l'ouverture du récipient 20. Ainsi, lorsque que le premier couvercle 22 est en position fermée il est obtenu avec le récipient 20 une liaison sensiblement étanche à l'air.

Conformément à une caractéristique essentielle de l'invention, la section d'entrée 34 du conduit 24, définie par le premier couvercle 22, présente au niveau de son raccordement au séparateur primaire 10 une forme générale annulaire, comme le montre la figure 3, et coaxiale à l'axe Δ, comme cela ressort des figures 2 et 3. À cet effet, le premier couvercle 22 comprend un noyau 36 qui est situé à l'intérieur du corps 25 et en obture partiellement le volume de manière à définir le conduit de liaison 24 qui présente une forme générale annulaire en étant situé entre le noyau 36 et le corps 25. Le conduit de liaison 24 s'étend donc tout autour du noyau 36.

Selon l'exemple illustré, le noyau 36 est creux et se trouve obturé au niveau de son extrémité supérieure située sensiblement au niveau de la section d'entrée 34 du premier couvercle 22. Le noyau 36 présente ici une conformation tubulaire tronconique convergeant vers le haut. Compte tenu de la forme du corps extérieur 25 et du noyau 36, la section d'entrée 34 possède une surface inférieure à la surface de la section de sortie 35 du conduit 24 située au niveau du raccordement de ce dernier avec le récipient 20. Il est à noter que la paroi externe du conduit de liaison 24, définie par la paroi interne du corps 25, diverge entre la section d'entrée 34 et la section de sortie 35. Selon l'exemple illustré, la divergence de la paroi externe du conduit de liaison 24 est telle que la section d'entrée 34 possède un diamètre d inférieur à la plus petite dimension D' de la périphérie de la section de sortie 35.

Le noyau 36 est en outre lié de manière rigide au corps extérieur 25 par au moins l'une et, selon l'exemple illustré, seulement une languette 37 de liaison dont la rigidité assure un parfait positionnement du noyau 36 coxialement à l'axe Δ.

Lors du fonctionnement de l'aspirateur, la forme annulaire de la section d'entrée 34 du conduit 24 est particulièrement adaptée à la récupération des particules qui se trouvent naturellement projetées vers l'extérieur sous l'effet des forces centrifuges induites par le vortex du cyclone du séparateur primaire 10. De plus, la forme annulaire du conduit 24, définie par le premier couvercle 22, évite un couplage visqueux entre l'air contenu dans le récipient 20 et l'air du vortex à l'intérieur du séparateur primaire 10. Ainsi l'apparition de remous au sein du récipient 20 est limitée ce qui évite une réintroduction dans le séparateur primaire 10 des poussières et déchets qui se seront accumulés dans le récipient 20. L'élargissement du conduit 24 ou son augmentation de section depuis le séparateur primaire 10 jusqu'au récipient 20 contribue à un ralentissement de l'air réduisant également les risques de couplage et de remous.

Afin d'éviter l'accumulation de fibres et autres filaments sur la languette 37 pendant le fonctionnement de l'aspirateur, cette dernière est associée à un déflecteur 38 qui s'étend à partir de ladite languette de liaison 37 à l'intérieur du premier récipient amovible 20. Le déflecteur 38 présente une surface externe convexe et possède une partie terminale inclinée vers le sens du premier récipient amovible comme le montre la figure 5. Le déflecteur 38 possède également une fonction anti-remous en faisant obstacle à la création d'un mouvement d'air circulaire à l'intérieur du récipient 20.

Afin d'éviter au maximum une ressortie des déchets qui se sont accumulés dans le récipient 20, le noyau 36 comprend, selon l'exemple illustré, dans sa région inférieure une collerette plane 40 périphérique anti-refoulement. Cette collerette 40 est coplanaire avec la languette de liaison 37 et présente une forme générale sensiblement annulaire sauf pour ce qui concerne la région correspondant à la languette 37. Afin d'optimiser sa fonction anti-refoulement, la collerette 40 possède un diamètre extérieur D sensiblement égal ou supérieur au diamètre externe d de la section d'entrée du premier couvercle comme le montre la figure 3.

Il apparaît donc que la mise en oeuvre du premier couvercle 22 ainsi constitué en tant qu'interface entre le séparateur primaire 10 et le récipient 20 permet pendant le fonctionnement de l'aspirateur d'optimiser la récupération des déchets tout en réduisant les risques de recirculation de ces derniers. De plus, lorsque le premier récipient amovible est retiré du bâti 1, le premier couvercle 22 évite, en offrant une section d'entrée réduite par rapport à la section maximale du récipient 20, que les déchets accumulés dans ce dernier ne s'échappent de manière intempestive. Une fois arrivé sur le lieu de vidage du récipient 20, l'utilisateur peut en ouvrant le premier couvercle 22 dégager largement l'ouverture du récipient 20 et procéder facilement au retrait des déchets accumulés par exemple en retournant le récipient 20 au-dessus d'une poubelle.

Selon l'exemple illustré, afin de maintenir le premier couvercle 22 en position fermée, il est mis en oeuvre des moyens de verrouillage 41 comprenant par exemple un système de crochet élastiquement déformable.

Selon l'exemple illustré, le premier couvercle 22 est articulé sur le récipient 20 au moyen d'une charnière toutefois, il pourrait être envisagé que le premier couvercle 22 soit simplement emboîté sur le récipient 20 et puisse ainsi en être complètement séparé.

Par ailleurs, selon la forme de réalisation illustrée, la partie 45 de la paroi du corps tubulaire 15, située avant la zone de raccordement au premier couvercle 22, diverge, plus fortement que dans les autres régions du corps 15, de manière que la zone de raccordement ou partie basse du corps 15 possède un diamètre interne supérieur au diamètre interne du corps tubulaire en dehors de la zone de raccordement. Ainsi, il est défini une sorte de zone tampon 46 qui induit un ralentissement de l'air et qui est en mesure de retenir les déchets pour éviter leur recirculation avant leur entrée dans le conduit de liaison du premier couvercle vers le bac de récupération.

Afin d'assurer la récupération des déchets séparés par le deuxième étage 9 qui sont généralement de petite taille et formés par des poussières appelées aussi « fines », l'aspirateur selon l'invention comprend un deuxième récipient amovible 50 qui est distinct du premier récipient amovible 20 en étant indépendant et séparable de ce dernier. Selon l'exemple illustré, le deuxième récipient amovible 50 est destiné à être placé au-dessus du premier récipient 20 en étant en appui sur le premier couvercle 22 pendant le fonctionnement de l'aspirateur. Ainsi, le fond 51 du deuxième récipient amovible 50 présente une forme complémentaire de celle du dessus du corps extérieur creux 25 du premier couvercle 22.

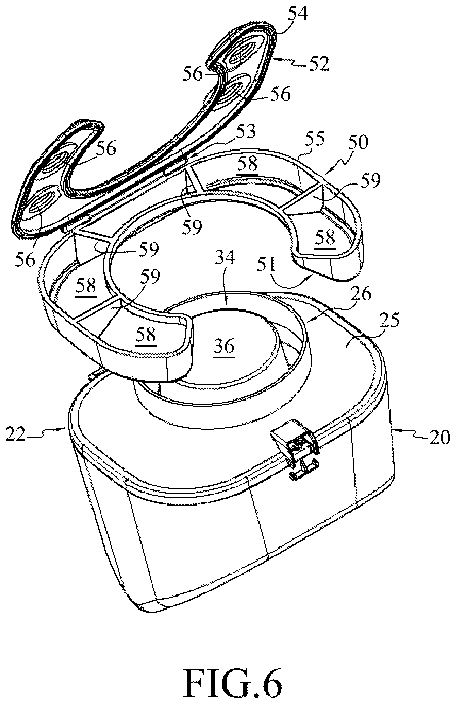

Dans le cas présent, le deuxième récipient amovible 50 présente une forme en fer à cheval de manière à entourer partiellement la partie supérieure 26 du corps 25 du couvercle 22. Afin de permettre un transport du deuxième récipient amovible 50 vers un lieu de vidage en limitant les risques de sortie des fines qui y sont accumulées, le deuxième récipient amovible 50 comprend un couvercle mobile 52. Selon l'exemple illustré, le deuxième couvercle 52 est lié au récipient amovible 50 par une charnière 53 de manière à être mobile entre une position fermée telle qu'illustrée aux figures 1, 2, 4, 5 et une position ouverte représentée à la figure 6. Afin d'éviter les fuites d'air, le deuxième couvercle 52 comprend une gorge périphérique 54 de réception d'un joint non représenté et destiné à venir en appui sur le rebord périphérique 55 du deuxième récipient amovible 50, en position fermée du couvercle 52.

Le deuxième couvercle mobile 52 comprend en outre une ouverture distincte 56 de raccordement pour chaque séparateur secondaire 11, de sorte que, selon l'exemple illustré, le couvercle 52 comprend quatre ouvertures de raccordement 56. L'étanchéité de la liaison entre chaque séparateur secondaire 11 et le couvercle mobile 52 est assurée au moyen d'une garniture d'étanchéité annulaire 57 qui équipe chaque ouverture de raccordement 56.

Afin de limiter les sifflements et les risques de recirculation des fines, le deuxième récipient amovible 50 comprend un compartiment à déchets 58 pour chaque séparateur secondaire 11. Les compartiments à déchets 58 sont alors séparés les uns des autres par des cloisons 59 aménagées dans le deuxième récipient amovible 50.

Selon l'exemple illustré et décrit précédemment, le deuxième étage de séparation des déchets 9 est situé à l'extérieur du premier étage 8 de séparation des déchets. Toutefois, le deuxième étage 9 de séparation des déchets pourrait également être situé à l'intérieur du premier étage 8. Le deuxième récipient amovible 50 associé à ce deuxième étage 9 pourrait alors se trouver placé dans un logement de réception aménagé à cet effet dans le noyau 36 du premier couvercle 22.

Bien entendu, diverses autres modifications peuvent être apportées, dans le cadre des revendications annexées, à l'aspirateur selon l'invention et, notamment, à l'ensemble formé par le premier couvercle et le premier récipient amovible de récupération des déchets séparés par l'étage primaire.

## Revendications

1. Aspirateur comprenant un ensemble de séparation des déchets qui comprend :
- au moins un premier étage (8) de séparation cyclonique comportant un séparateur primaire (10) par cyclone d'axe longitudinal Δ,
- un premier récipient amovible (20) de récupération des déchets situé sous le séparateur primaire (10),
- au moins un deuxième étage (9) de séparation cyclonique comportant au moins un séparateur secondaire par cyclone (11) d'axe longitudinal Δ',
- au moins un deuxième récipient amovible de récupération des déchets situé sous le séparateur secondaire et séparé du premier récipient de récupération des déchets, le deuxième récipient amovible (50) de récupération des déchets étant indépendant du premier récipient amovible (20) et pouvant être transporté indépendamment de ce dernier **caractérisé en ce que** le deuxième récipient amovible de récupération des déchets (50) comprend un couvercle mobile (52) qui est pourvu d'une ouverture (56) de raccordement à chaque séparateur secondaire (11).

2. Aspirateur selon la revendication 1, **caractérisé en ce que** le deuxième étage de séparation cyclonique (9) comporte plusieurs séparateurs secondaires (11) et **en ce que** le deuxième récipient amovible (50) de récupération des déchets comprend un compartiment à déchets (58) séparé des autres compartiments (58) pour chaque séparateur secondaire (11).

3. Aspirateur selon la revendication 1 ou 2, **caractérisé en ce que** le deuxième récipient amovible de récupération des déchets (50) est placé au-dessus du premier récipient amovible de récupération des déchets (20).

4. Aspirateur selon l'une des revendications 1 à 3, **caractérisé en ce que** le premier récipient amovible (20) de récupération des déchets est associé à un premier couvercle mobile (22) et **en ce que** le deuxième récipient amovible (50) de récupération des déchets est placé sur le premier couvercle (22) ou dans un logement du premier couvercle (22).

5. Aspirateur selon la revendication 4, **caractérisé en ce que** le premier couvercle mobile (22) qui définit un conduit (24) de liaison entre le séparateur primaire (10) et le premier récipient amovible (20), le conduit de liaison (24) ayant, au niveau de son raccordement au séparateur primaire (10), une section d'entrée (34) de forme générale annulaire coaxiale à l'axe Δ.

6. Aspirateur selon la revendication 5, **caractérisé en ce que** le premier couvercle comprend :
- un corps extérieur creux (25) dont une extrémité supérieure comprend des moyens de raccordement au séparateur primaire (10) et une extrémité inférieure comprend des moyens de raccordement au premier récipient amovible (20),
- un noyau (36) qui est situé à l'intérieur du corps extérieur (25) et qui délimite avec le corps extérieur (25) le conduit de liaison (24) s'étendant entre le noyau et le corps extérieur.

7. Aspirateur selon la revendication 6, **caractérisé en ce que** le corps extérieur comprend une partie supérieure (26) tubulaire sensiblement cylindrique d'axe Δ et une partie inférieure (27) de forme générale tronconique d'axe Δ.

8. Aspirateur selon la revendication 7, **caractérisé en ce que** le deuxième étage (9) de séparation cyclonique est situé à l'extérieur du premier étage (8) de séparation cyclonique et **en ce que** le deuxième récipient (50) s'étend en partie au moins autour de la partie supérieure (26) du corps extérieur (25) du premier couvercle (22).

9. Aspirateur selon la revendication 7, **caractérisé en ce que** le deuxième étage (9) de séparation cyclonique est situé à l'intérieur du premier étage (8) de séparation cyclonique et **en ce que** le deuxième récipient (50) de récupération des déchets est situé dans un logement du noyau (36) du premier couvercle (22).

## Patentansprüche

1. Staubsauger, umfassend eine Anordnung zum Abscheiden von Abfällen, die umfasst:
- mindestens eine erste Zyklonabscheidestufe (8), die einen primären Zyklonabscheider (10) mit einer Längsachse Δ aufweist,
- einen ersten abnehmbaren Behälter (20) zum Sammeln von Abfällen, der sich unter dem primären Abscheider (10) befindet,
- mindestens eine zweite Zyklonabscheidestufe (9), die mindestens einen sekundären Zyklonabscheider (11) mit einer Längsachse Δ' aufweist,
- mindestens einem zweiten abnehmbaren Behälter zum Sammeln von Abfällen, der sich unterhalb des sekundären Abscheiders befindet und von dem ersten Behälter zum Sammeln von Abfällen getrennt ist, wobei der zweite abnehmbare Behälter (50) zum Sammeln von Abfällen unabhängig von dem ersten abnehmbaren Behälter (20) ist und unabhängig von dem letzteren transportiert werden kann, **dadurch gekennzeichnet, dass** der zweite abnehmbare Behälter zum Sammeln von Abfällen (50) eine bewegliche Abdeckung (52) umfasst, die mit einer Öffnung (56) zum Anschluss an jedem sekundären Abscheider (11) versehen ist.

2. Staubsauger nach Anspruch 1, **dadurch gekennzeichnet, dass** die zweite Zyklonabscheidestufe (9) mehrere sekundär Abscheider (11) aufweist, und dass der zweite abnehmbare Behälter (50) zum Sammeln von Abfällen ein Abfallabteil (58) umfasst, das von den anderen Abteilen (58) für jeden sekundären Abscheider (11) getrennt ist.

3. Staubsauger nach Anspruch 1 oder 2, **dadurch gekennzeichnet, dass** der zweite abnehmbare Behälter zum Sammeln von Abfällen (50) über dem ersten abnehmbaren Behälter zum Sammeln von Abfällen (20) platziert ist.

4. Staubsauger nach einem der Ansprüche 1 bis 3, **dadurch gekennzeichnet, dass** der erste abnehmbare Behälter (20) zum Sammeln von Abfällen einer ersten beweglichen Abdeckung (22) zugeordnet ist, und dass der zweite abnehmbare Behälter (50) zum Sammeln von Abfällen auf der ersten Abdeckung (22) oder in einem Gehäuse der ersten Abdeckung (22) platziert ist.

5. Staubsauger nach Anspruch 4, **dadurch gekennzeichnet, dass** die erste bewegliche Abdeckung (22) eine Verbindungsleitung (24) zwischen dem primären Abscheider (10) und dem ersten abnehmbaren Behälter (20) definiert, wobei die Verbindungsleitung (24) an ihrem Anschluss an dem primären Abscheider (10) einen Einlassabschnitt (34) von allgemein ringförmiger Form hat, der koaxial zu der Achse Δ ist.

6. Staubsauger nach Anspruch 5, **dadurch gekennzeichnet, dass** die erste Abdeckung umfasst:
- einen hohlen äußeren Körper (25), dessen oberes Ende Mittel zum Anschluss an dem primären Abscheider (10) und dessen unteres Ende Mittel zum Anschluss an dem ersten abnehmbaren Behälter (20) aufweist,
- ein Kern (36), der sich innerhalb des äußeren Körpers (25) befindet und der mit dem äußeren Körper (25) die Verbindungsleitung (24), dir sich zwischen dem Kern und dem äußeren Körper erstreckt, begrenzt.

7. Staubsauger nach Anspruch 6, **dadurch gekennzeichnet, dass** der äußere Körper einen im Wesentlichen zylindrischen rohrförmigen oberen Teil (26) der Achse Δ und einen unteren Teil (27) mit allgemein kegelstumpfförmiger Form der Achse Δ aufweist.

8. Staubsauger nach Anspruch 7, **dadurch gekennzeichnet, dass** sich die zweite Zyklonabscheidestufe (9) außerhalb der ersten Zyklonabscheidestufe (8) befindet, und dass sich der zweite Behälter (50) teilweise mindestens um den oberen Teil (26) des äußeren Körpers (25) der ersten Abdeckung (22) erstreckt.

9. Staubsauger nach Anspruch 7, **dadurch gekennzeichnet, dass** sich die zweite Zyklonabscheidestufe (9) innerhalb der ersten Zyklonabscheidestufe (8) befindet, und dass sich der zweite Behälter (50) zum Sammeln von Abfällen in einer Unterkunft des Kerns (36) der ersten Abdeckung (22) befindet.

## Claims

1. Vacuum cleaner comprising a waste separation assembly which comprises:
- at least one first stage (8) of cyclonic separation comprising a primary separator (10) by cyclone with longitudinal axis Δ,
- a first removable container (20) for recovering the waste located under the primary separator (10),
- at least one second stage (9) of cyclonic separation comprising at least one secondary separator (11) by cyclone with longitudinal axis Δ',
- at least one second removable container for recovering waste located under the secondary separator and separate from the first container for recovering waste, the second removable container (50) for recovering waste being independent from the first removable container (20) and capable of being transported separately from the latter **characterised in that** the second removable container for recovering waste (50) comprises a movable cover (52) which is provided with an opening (56) for connecting to each secondary separator (11).

2. Vacuum cleaner according to claim 1, **characterised in that** the second stage of cyclonic separation (9) comprises several secondary separators (11) and **in that** the second removable container (50) for recovering waste comprises a waste compartment (58) separated from the other compartments (58) for each secondary separator (11)

3. Vacuum cleaner according to claim 1 or 2, **characterised in that** the second removable container for recovering waste (50) is placed above the first removable container for recovering waste (20).

4. Vacuum cleaner according to any one of claims 1 to 3, **characterised in that** the first removable container (20) for recovering waste associated with a first movable cover (22) and **in that** the second removable container (50) for recovering waste is placed on the first cover (22) or in a housing of the first cover (22).

5. Vacuum cleaner according to claim 4, **characterised in that** the first movable cover (22) which defines a connecting duct (24) between the primary separator (10) and the first removable container (20), the connecting duct (24) having, at the level of its connection to the primary separator (10), has an inlet section (34) with generally annular shape coaxial with the axis Δ.

6. Vacuum cleaner according to claim 5, **characterised in that** the first cover comprises:
- an outer hollow body (25) of which a top end comprises means of connection to the primary separator (10) and a bottom end comprises means of connection to the first removable container (20),
- a core (36) which is located inside the outer body (25) and which delimits with the outer body (25) the connecting duct (24) extending between the core and the outer body.

7. Vacuum cleaner according to claim 6, **characterised in that** the outer body comprises a tubular top part (26) substantially cylindrical with axis Δ and a bottom part (27) with general truncated cone shape with axis Δ.

8. Vacuum cleaner according to claim 7, **characterised in that** the second stage (9) of cyclonic separation is located outside the first stage (8) of cyclonic separation and **in that** the second container (50) extends in part at least around the top part (26) of the outer body (25) of the first cover (22).

9. Vacuum cleaner according to claim 7, **characterised in that** the second stage (9) of cyclonic separation is located inside the first stage (8) of cyclonic separation and **in that** the second container (50) for recovering waste is located in a housing of the core (36) of the first cover (22).
